# EUROPEAN PATENT APPLICATION

(11) **EP 2 199 575 A1**
(43) Date of publication of application: **23.06.2010**
(21) Application number: 09178434.8
(22) Date of filing: 08.12.2009
(51) Int. Cl.: F02D 13/02, F02D 41/00, F02D 9/02, B60W 30/14, B60K 31/00

(54) **Intake air amount control system and method for internal combustion engine**

(30) Priority: 22.12.2008 JP 2008324952
(71) Applicant: Honda Motor Co., Ltd., Tokyo 107-8556 (JP)
(72) Inventor: Ide, Hirohito, Saitama 351-0193 (JP); Takamiya, Hideharu, Saitama 351-0193 (JP)
(74) Representative: Prechtel, Jörg

(57) **Abstract**

An intake air amount control system for an internal combustion engine, which is capable of reducing energy for driving a variable intake lift mechanism, and properly controlling an intake air amount during an auto cruise operation. The intake air amount control system for the engine holds a lift of an intake valve at a predetermined lift by holding a target lift at the predetermined lift when it is determined that a vehicle is in the auto cruise operation. This reduces energy required for an intake lift actuator which drives the variable intake lift mechanism, and suppresses heat generated by a motor of the intake lift actuator. Further, during the auto cruise operation, by changing a throttle valve opening, the intake air amount is properly controlled.

## Description

### BACKGROUND OF THE INVENTION

### Field of the Invention

The present invention relates to an intake air amount control system and method for an internal combustion engine, which controls an intake air amount drawn into the engine including an auto cruise control unit.

### Description of the Related Art

As a conventional intake air amount control system for an internal combustion engine, there has been proposed a method disclosed in Japanese Laid-Open Patent Publication (Kokai) No. H05-222967. The internal combustion engine is installed on a vehicle, and the conventional intake air amount control system is comprised of a throttle valve disposed in an intake passage, a mechanical supercharger disposed in the intake passage at a location downstream of the throttle valve, a bypass passage which branches from the intake passage at a point downstream of the throttle valve in a manner bypassing the supercharger, and an air bypass valve disposed in the bypass passage. Further, this engine includes an auto cruise control unit that holds the vehicle speed of a vehicle at a target vehicle speed.

Further, in the conventional intake air amount control system, when the engine is in an auto cruise operation by the auto cruise control unit, if the target vehicle speed set therefor is not less than a predetermined value, the air bypass valve is closed, and a larger amount of intake air is supplied by driving the supercharger. On the other hand, if the target vehicle speed is less than the predetermined value, the air bypass valve is opened, and a smaller amount of intake air amount is supplied via the bypass passage by interrupting the supercharger.

As described above, in the conventional intake air amount control system, during the auto cruise operation, either the air bypass valve or the supercharger is used depending on whether or not the target vehicle speed is not less than the predetermined value. If the target vehicle speed is not less than the predetermined value, the supercharger is always driven to ensure the larger intake air amount.

However, in a case where such a method of controlling the intake air amount is applied to an intake air amount control system including a variable valve-operating mechanism which is capable of continuously changing the lift of an intake valve, and an intake air amount-adjusting valve which is disposed in the intake passage and is capable of adjusting the intake air amount by changing the opening thereof, there arises a problem described hereafter. In general, energy required for driving the variable valve-operating mechanism is generally larger than energy for driving the intake air amount-adjusting valve due to the complicated structure of the variable valve-operating mechanism.

However, if the conventional control method is applied to such an intake air amount control system, the control of the intake air amount by the variable valve-operating mechanism is selected when the target vehicle speed is not less than the predetermined value during the auto cruise operation, so as to ensure a larger intake air amount. As a result, during the auto cruise operation, the variable valve-operating mechanism requiring larger driving energy continues to be operated, so that the required energy is increased. Further, in a case where the variable valve-operating mechanism is driven by an electric actuator, the amount of heat generated by the actuator becomes large.

### SUMMARY OF THE INVENTION

It is an object of the present invention to provide an intake air amount control system and method for an internal combustion engine, which are capable of reducing energy for driving a variable valve-operating mechanism, and properly controlling an intake air amount during the auto cruise operation.

To attain the above object, in a first aspect of the present invention, there is provided an intake air amount control system for an internal combustion engine that is installed on a vehicle, and includes a variable valve-operating mechanism which is capable of continuously changing a lift of an intake valve, an intake air amount-adjusting valve which is disposed in an intake passage and is capable of adjusting an intake air amount by changing an opening thereof, and an auto cruise function for performing an auto cruise operation in which a vehicle speed of the vehicle is held at a target vehicle speed, characterized by comprising an actuator that drives the variable valve-operating mechanism, auto cruise-determining means for determining whether or not the engine is in the auto cruise operation, target lift-holding means for holding a target lift which is a target of the lift of the intake valve, at a predetermined lift, when it is determined that the engine is in the auto cruise operation, and intake air amount-adjusting valve control means for controlling the intake air amount by changing the opening of the intake air amount-adjusting valve when the target lift is held at the predetermined lift by the target lift-holding means.

With the configuration of the intake air amount control system for an internal combustion engine according to the first aspect of the present invention, the lift of the intake valve is continuously changed by driving the variable valve-operating mechanism by the actuator, and the intake air amount is controlled by changing the opening of the intake air amount-adjusting valve. Further, it is determined whether or not the engine is in the auto cruise operation, and if it is determined that the engine is in the auto cruise operation, the target lift which is the target of the lift of the intake valve is held at the predetermined lift. The actuator is driven based on the target lift, whereby the lift of the intake valve is held at the predetermined lift. The energy required for holding the lift of the intake valve by the actuator is much less than the energy required for changing the lift of the intake valve. Therefore, as described above, the lift of the intake valve is held at the predetermined lift during the auto cruise operation, whereby it is possible to reduce the energy required for driving the variable valve-operating mechanism.

Further, if it is determined that the engine is in the auto cruise operation, the intake air amount is controlled by changing the opening of the intake air amount-adjusting valve. Although the response of the intake air amount controlled by the intake air amount-adjusting valve is lower than that by the variable valve-operating mechanism, the vehicle drives at a substantially fixed vehicle speed during the automatic cruise operation, so that the response of the intake air amount is not required to be high. Therefore, it is possible to properly control the intake air amount by the intake air amount-adjusting valve in a state in which the lift of the intake valve is held during the auto cruise operation.

Preferably, the intake air amount control system further comprises predetermined lift-setting means for setting the predetermined lift to a fixed value irrespective of the target vehicle speed.

With the configuration of the preferred embodiment, the lift of the intake valve is set to a fixed value irrespective of the target vehicle speed during the auto cruise operation, and hence, even when the target vehicle speed is changed during the auto cruise operation, the intake air amount is controlled by changing the opening of the intake air amount adjustment valve with which the response of the intake air amount is lower, while holding the lift of the intake valve. Therefore, it is possible to smoothly change the vehicle speed according to changes in the target vehicle speed without causing a shock or the like due to a rapid change in the intake air amount caused by a change in the lift of the intake valve with which the response of the intake air amount is higher.

Preferably, the intake air amount control system further comprises predetermined lift-setting means for setting the predetermined lift according to the target vehicle speed.

With the configuration of the preferred embodiment, the lift of the intake valve is held at the predetermined lift according to the target vehicle speed during the auto cruise operation. Therefore, it is possible to ensure the intake air amount substantially matching the target vehicle speed, using the variable valve-operating mechanism, and it is possible to properly control the intake air amount by fine adjustment using the intake air amount-adjusting valve.

Preferably, the actuator is of an electric type.

With the configuration of the preferred embodiment, in a case where the actuator is of an electric type, as the energy for driving the same is larger, for example, the amount of heat generated by a motor of the actuator becomes larger. Therefore, during the auto cruise operation, it is possible to effectively suppress generation of heat from the motor, by reduction of the energy for driving the actuator, which the holding of the intake lift involves.

To attain the above object, in a second aspect of the present invention, there is provided a method of controlling an amount of intake air supplied to an internal combustion engine that is installed on a vehicle, and includes a variable valve-operating mechanism which is capable of continuously changing a lift of an intake valve, an intake air amount-adjusting valve which is disposed in an intake passage and is capable of adjusting an intake air amount by changing an opening-thereof, an actuator that drives the variable valve-operating mechanism, and an auto cruise function for performing an auto cruise operation in which a vehicle speed of the vehicle is held at a target vehicle speed, characterized by comprising an auto cruise-determining step of determining whether or not the engine is in the auto cruise operation, a target lift-holding step of holding a target lift which is a target of the lift of the intake valve, at a predetermined lift, when it is determined that the engine is in the auto cruise operation, and an intake air amount-adjusting valve control step of controlling the intake air amount by changing the opening of the intake air amount-adjusting valve when the target lift is held at the predetermined lift in the target lift-holding step.

With the configuration of the method according to the second aspect of the present invention, it is possible to obtain the same advantageous effects as provided by the first aspect of the present invention.

Preferably, the method further comprises a predetermined lift-setting step of setting the predetermined lift to a fixed value irrespective of the target vehicle speed.

Preferably, the method further comprises a predetermined lift-setting step of setting the predetermined lift according to the target vehicle speed.

Preferably, the actuator is of an electric type.

With the configurations of these preferred embodiments, it is possible to obtain the same advantageous effects as provided by the respective corresponding preferred embodiments of the first aspect of the present invention.

The above and other objects, features, and advantages of the present invention will become more apparent from the following detailed description taken in conjunction with the accompanying drawings.

### BRIEF DESCRIPTION OF THE DRAWINGS

FIG. 1 is a schematic view of an internal combustion engine to which is applied an intake air amount control system according to an embodiment of the present invention;
FIG. 2 is a block diagram of a control system of an intake system;
FIG. 3 is a schematic view of an arrangement of an intake-side valve-operating mechanism;
FIG. 4 is a diagram showing valve lift curves of an intake valve according to changes in intake lift caused by a variable intake lift mechanism;
FIG. 5 is a flowchart of an intake air amount control process;
FIG. 6 is a diagram showing an example of a predetermined lift map; and
FIG. 7 is a diagram showing a variation of the predetermined lift map.

### DETAILED DESCRIPTION OF PREFERRED EMBODIMENTS

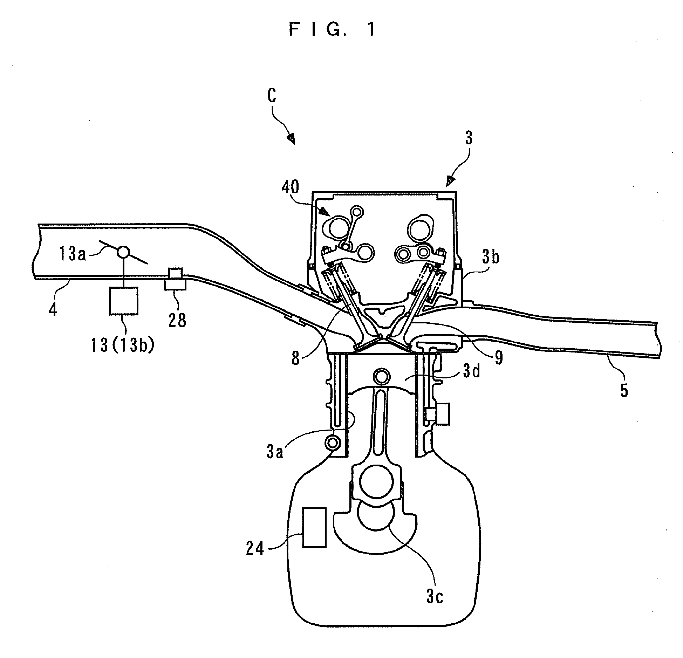

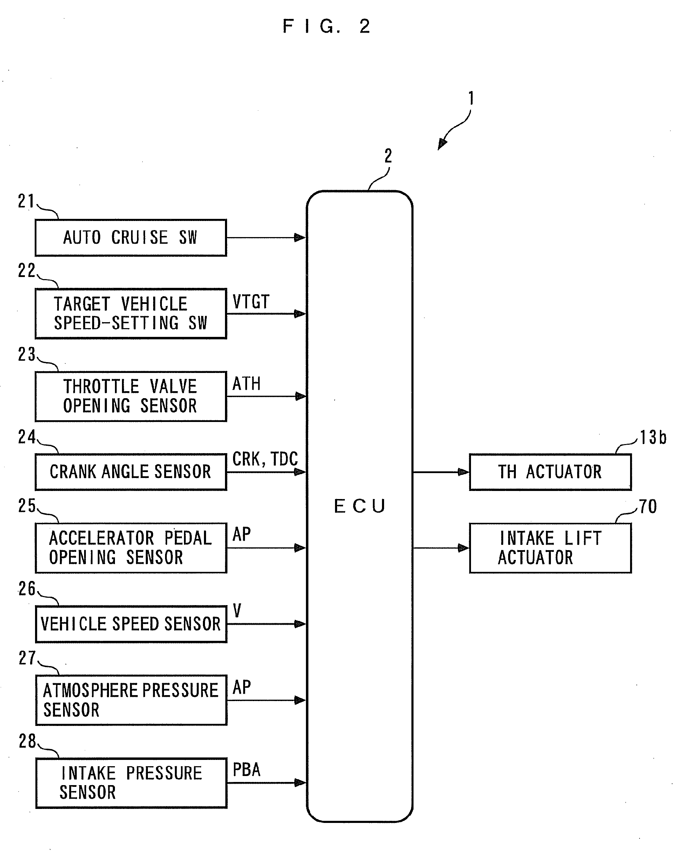

The invention will now be described in detail with reference to the drawings showing preferred embodiment thereof. FIG. 1 schematically shows an internal combustion engine 3 to which is applied an intake air amount control system 1 (see FIG. 2) according to the present embodiment. The internal combustion engine (hereinafter referred to as "the engine") 3 is a gasoline engine of e.g. an in-line four-cylinder type, and is installed on a vehicle C.

The engine 3 has a cylinder head 3b having an intake pipe 4 and an exhaust pipe 5 connected thereto, a pair of intake valves 8 and 8 (only one of which is shown), and a pair of exhaust valves 9 and 9 (only one of which is shown) disposed therein, provided for each of cylinders 3a thereof. The intake valves 8 are opened and closed by an intake-side valve-operating mechanism 40.

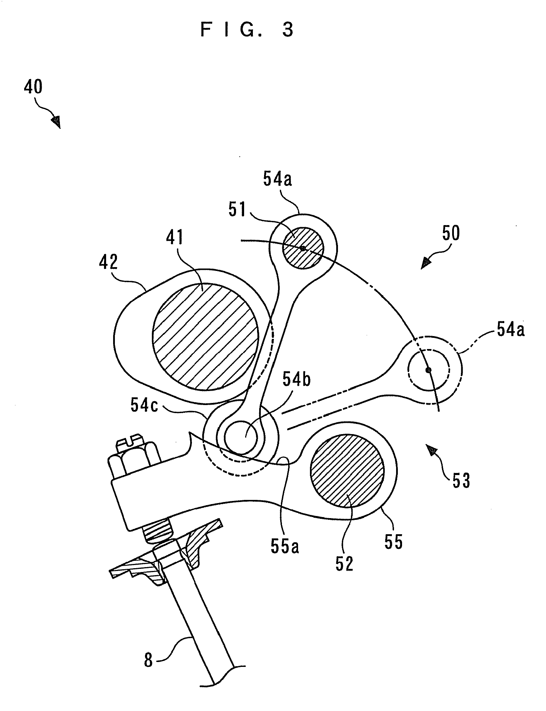

As shown in FIG. 3, the intake-side valve-operating mechanism 40 is comprised of an intake cam shaft 41, an intake cam 42, and a variable intake lift mechanism 50. In the present embodiment, the lift of the intake valves 8 is steplessly changed by the variable intake lift mechanism 50. It should be noted that the phrase "the lift of the intake valves 8 (hereinafter referred to as the "intake lift")" is intended to mean the maximum lift of the intake valves 8.

The intake cam shaft 41 is connected to a crankshaft 3c (see FIG. 1) via an intake sprocket and a timing chain (neither of which is shown), and rotates once whenever the crankshaft 3c rotates twice.

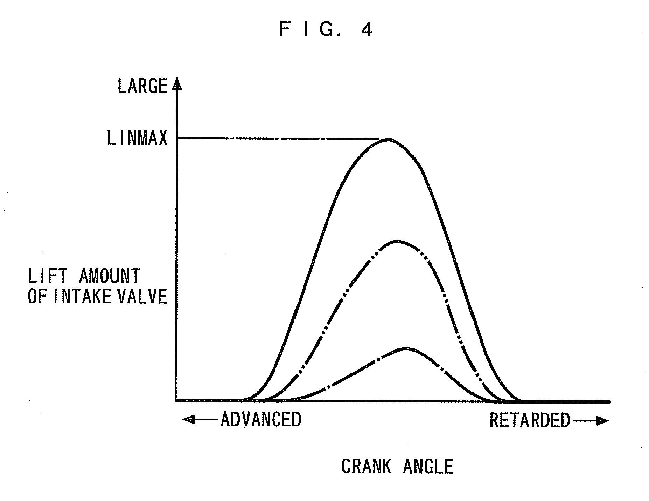

The variable intake lift mechanism 50 is configured to steplessly change an intake lift LIFTIN between a minimum lift LINMIN (value of 0) and a predetermined maximum lift LINMAX (see FIG. 4). The arrangement of the variable intake lift mechanism 50 is similar to that proposed in Japanese Laid-Open Patent Publication (Kokai) No. 2007-100522 by the present applicant, and hence hereinafter, a brief description will be given of the outline thereof.

As shown in FIG. 3, the variable intake lift mechanism 50 is comprised of a control shaft 51, a rocker arm shaft 52, rocker arm mechanisms 53 which are provided on these shafts 51 and 52 for the respective cylinders 3a, and an intake lift actuator 70 (see FIG. 2) which simultaneously actuates these rocker arm mechanisms 53.

The rocker arm mechanisms 53 are each comprised of a link 54a, a roller shaft 54b, a roller 54c and a rocker arm 55. Further, the intake lift actuator 70 is a combination of a motor and a reduction gear mechanism (neither of which is shown), and when the intake lift actuator 70 is driven by a control input delivered from an ECU 2, the control shaft 51 is pivotally moved, whereby the link 54a is pivoted about the roller shaft 54b.

When the link 54a is at a zero lift position indicated by a solid line in FIG. 3, if the roller 54c is pushed toward the rocker arm shaft 52 by the intake cam 42 along with rotation of the intake cam shaft 41, the link 54a is pivotally moved counterclockwise about the control shaft 51 as viewed in FIG. 3. At this time, the rocker arm 55 is held at a valve-closing position shown in FIG. 3 by the urging force of a valve spring since a guide surface 55a of the rocker arm 55 has a shape which coincides with an arc about the control shaft 51. Therefore, the intake lift LIFTIN is held at 0, and the intake valve 8 is held in a closed state.

On the other hand, assuming that the control shaft 51 is pivotally moved causing the link 54a to be pivoted from the zero lift position toward the maximum lift position (position indicated by a two dot-chain line in FIG. 3) and then the control shaft 51 is held in the resulting position, if the link 54a is pivotally moved counterclockwise about the control shaft 51 by rotation of the intake cam 42 as viewed in FIG. 3, the rocker arm 55 is pivoted downward from the valve-closing position as viewed in FIG. 3, against the urging force of the valve spring to open the intake valve 8. At this time, the amount of pivotal motion, i.e. the intake lift LIFTIN of the rocker arm 55 becomes larger, as the link 54a is closer toward the maximum lift position.

With the above-described arrangement, as the link 54a is closer toward the maximum lift position, the intake valve 8 is opened with a larger lift. More specifically, during rotation of the intake cam 42, when the link 54a is at the maximum lift position, the intake valve 8 is opened along a valve lift curve indicated by a solid line illustrated in FIG. 4, and the intake lift LIFTIN becomes equal to the maximum lift LINMAX. Therefore, in this variable intake lift mechanism 50, by pivotally moving the link 54a between the zero lift position and the maximum lift position via the intake lift actuator 70, it is possible to steplessly vary the intake lift LIFTIN between the minimum lift LINMIN (value of 0) and the predetermined maximum lift LINMAX. Thus, in the engine 3, the intake lift LIFTIN is steplessly changed by the intake-side valve-operating mechanism 40.

The engine 3 is provided with a crank angle sensor 24. The crank angle sensor 24 is formed by a magnet rotor and an MRE pickup (neither of which is shown), and delivers a CRK signal and a TDC signal, which are both pulse signals, to the ECU 2 along with rotation of the crankshaft 3c.

Each pulse of the CRK signal is generated whenever the crankshaft 3c rotates through a predetermined crank angle. The ECU 2 calculates rotational speed (hereinafter referred to as the "engine speed") NE of the engine 3 based on the CRK signal. Further, the TDC signal indicates that a piston 3d of each cylinder 3a is at a predetermined crank angle position in the vicinity of TDC (top dead center) at the start of the suction stroke thereof, and in the case of the four-cylinder engine of the present embodiment, a pulse thereof is delivered whenever the crankshaft rotates through 180 degrees.

Further, the intake pipe 4 is provided with a throttle valve mechanism 13. The throttle valve mechanism 13 includes a throttle valve 13a disposed in the intake pipe 4 in a pivotally-movable manner, and a TH actuator 13b which drives the throttle valve 13a. The TH actuator 13b is a combination of a motor and a gear mechanism (neither of which is shown), and is driven by a drive signal delivered from the ECU 2. Therefore, an opening (hereinafter referred to as the "throttle valve opening ") ATH of the throttle valve 13a is varied, whereby a fresh air amount (hereinafter referred to as the "intake air amount") drawn into the cylinders 3a is controlled. Further, the throttle valve opening ATH is detected by a throttle valve opening sensor 23 (see FIG. 2), and a signal indicative of the sensed throttle valve opening ATH is delivered to the ECU 2.

Further, the intake pipe 4 is provided with an intake pressure sensor 28 at a location downstream of the throttle valve 13a. The intake pressure sensor 28 detects pressure of the intake air (hereinafter referred to as the "intake pressure") PBA, and delivers a signal indicative of the sensed intake pressure PBA to the ECU 2.

Further, an accelerator pedal opening sensor 25, a vehicle speed sensor 26, and an atmosphere pressure sensor 27 are connected to the ECU 2. The accelerator pedal opening sensor 25 detects the stepped-on amount of an accelerator pedal, not shown, (hereinafter referred to as the "accelerator pedal opening") AP; the vehicle speed sensor 26 detects a vehicle speed V of the vehicle C; the atmosphere pressure sensor 27 detects an atmosphere pressure PA; and signals indicative of the sensed accelerator pedal opening AP, vehicle speed V, and atmosphere pressure PA are delivered to the ECU 2.

Further, an auto cruise switch (SW) 21, and a target vehicle speed-setting switch (SW) 22 for setting a target vehicle speed VTGT are connected to the ECU 2. When the auto cruise switch 21 is turned on, the auto cruise operation for holding the detected vehicle speed V at the set target vehicle speed VTGT is carried out.

The ECU 2 is implemented by a microcomputer comprised of an I/O interface, a CPU, a RAM, and a ROM, (none of which are specifically shown). The detection signals from the aforementioned sensors 23 to 28 are input to the CPU after the I/O interface performs A/D conversion and waveform shaping thereon. In response to these input signals, the ECU 2 determines operating conditions of the engine 3 according to a control program stored in the ROM, and controls the operation of the engine 3 including the intake air amount control system 1, according to the determined operating conditions of the engine.

It should be noted that in the present embodiment, the ECU 2 corresponds to auto cruise-determining means, target lift-holding means, and intake air amount-adjusting valve control means, in the present invention. A description will be given of an intake air amount control process executed by the ECU 2 with reference to the drawings.

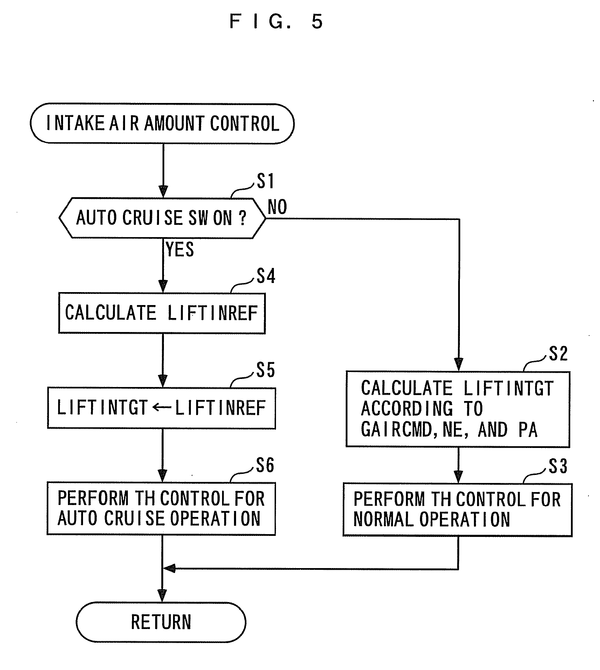

FIG. 5 is a flowchart of the intake air amount control process. The present process is executed whenever a predetermined time period (e.g. 10 msec) elapses. First, in a step 1 (shown as S1 in abbreviated form; the following steps are also shown in abbreviated form), it is determined whether or not the auto cruise switch 21 is turned on. If the answer to this question is NO, it is determined that the engine is not in the auto cruise operation, but in the normal operation. At this time, in a step 2, a target lift LIFTINTGT is calculated by searching a predetermined map (not shown) according to a target intake air amount GAIRCMD, the engine speed NE, and the atmosphere pressure PA. When the target lift LIFTINTGT is calculated as mentioned above, the intake lift actuator 70 of the variable intake lift mechanism 50 is driven based on the calculated target lift LIFTINTGT, whereby the intake lift LIFTIN is controlled to the target lift LIFTINTGT. It should be noted that the above-mentioned target intake air amount GAIRCMD is calculated according to a demanded torque PMCMD. Further, the demanded torque PMCMD is calculated by searching a predetermined map (not shown) according to the engine speed NE and the accelerator pedal opening AP.

Next, throttle valve control for the normal operation is carried out on the throttle valve 13a (step 3), followed by terminating the present process. In this throttle valve control for the normal mode, the opening of the throttle valve 13a is controlled such that an intake negative pressure PB as the difference between the intake pressure PBA and the atmosphere pressure PA (PBA - PA) becomes equal to a target negative pressure PBCMD. This target negative pressure PBCMD is calculated according to the engine speed NE. As mentioned above, during the normal operation, the intake air amount is mainly controlled by the variable intake lift mechanism 50, and the intake negative pressure PB is controlled by the throttle valve 13a.

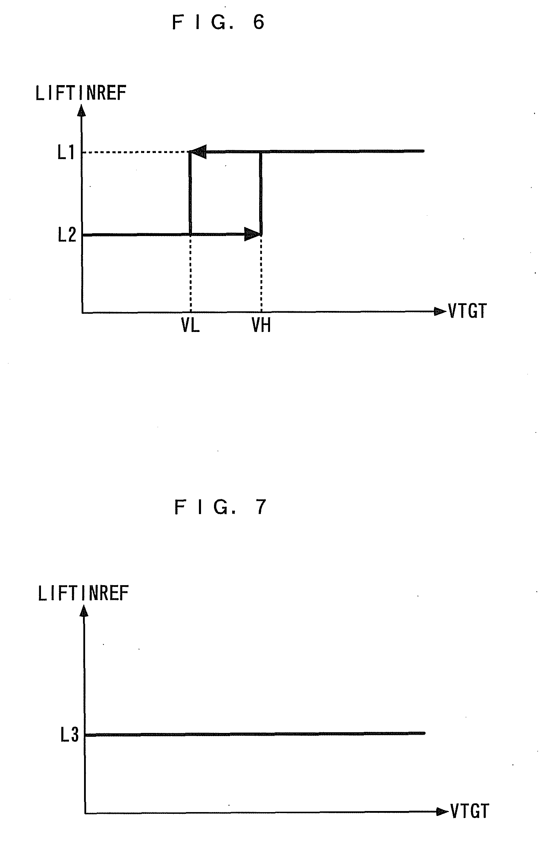

On the other hand, if the answer to the question of the step 1 is YES, i.e. if it is determined that the engine is in the auto cruise operation, a predetermined lift LIFTINREF is calculated by searching a predetermined lift map shown in FIG. 6 according to the target vehicle speed VTGT (step 4). Next, the calculated predetermined lift LIFTINREF is set as the target lift LIFTINTGT (step 5). Then, the intake lift actuator 70 of the variable intake lift mechanism 50 is driven based on the set target lift LIFTINTGT, whereby the intake lift LIFTIN is held at the predetermined lift LIFTINREF.

In this predetermined lift map, when the target vehicle speed VTGT is high, the predetermined lift LIFTINREF is set to a first predetermined value L1, which is the larger of two predetermined values, and when the target vehicle speed VTGT is low, the predetermined lift LIFTINREF is set to a second predetermined value L2, which is the smaller of the two predetermined values. Further, in this predetermined lift map, hysteresis is set with respect to the target vehicle speed VTGT. Specifically, if the target vehicle speed VTGT is increased, when the target vehicle speed VTGT exceeds a predetermined first vehicle speed VH, the predetermined lift LIFTINREF is set to the first predetermined value L1, whereas if the target vehicle speed VTGT is reduced, when the target vehicle speed VTGT becomes less than a predetermined second vehicle speed VL which is lower than the predetermined first vehicle speed VH, the predetermined lift LIFTINREF is set to the second predetermined value L2.

Next, throttle valve control for the auto cruise operation is carried out on the throttle valve 13a to thereby control the intake air amount (step 6), followed by terminating the present process. In this throttle valve control for the auto cruise operation, the throttle valve opening ATH is controlled according to the target intake air amount GAIRCMD, the engine speed NE, and the atmosphere pressure PA.

As described above, according to the present embodiment, when it is determined that the engine is in the auto cruise operation, the target lift LIFTINTGT, i.e. the intake lift LIFTIN is held at the predetermined lift LIFTINREF (step 5 in FIG. 5), so that it is possible to reduce the energy required for driving the intake lift actuator 70 that drives the variable intake lift mechanism 50, and it is possible to effectively suppress heat generated by the motor of the intake lift actuator 70. Further, since the intake air amount is controlled by changing the throttle valve opening ATH (step 6 in FIG. 5), it is possible to properly control the intake air amount.

Further, since the predetermined lift LIFTINREF is set according to the target vehicle speed VTGT (step 4 in FIG. 5), it is possible to ensure the intake air amount substantially matching the target vehicle speed VTGT, using the variable intake lift mechanism 50, and further, it is possible to properly control the intake air amount by fine adjustment using the throttle valve 13a.

FIG. 7 is a diagram showing a variation of the predetermined lift map used in the step 4 in FIG. 5. In this predetermined lift map, the predetermined lift LIFTINREF is set to a third predetermined value L3 which is fixed, irrespective of the target vehicle speed VTGT. According to this variation, even when the target vehicle speed VTGT changes during the auto cruise operation, the intake air amount is controlled by changing the opening of the throttle valve 13a with which the response of the intake air amount is lower, while holding the intake lift LIFTIN. Therefore, it is possible to smoothly change the vehicle speed V according to changes in the target vehicle speed VTGT without causing a shock due to a rapid change in the intake air amount along with a change in the intake lift LIFTIN with which the response of the intake air amount is higher.

It should be noted that the present invention is by no means limited to the embodiments described above, but it can be practiced in various forms. For example, although in the present embodiment, the variable intake lift mechanism 50 formed by a combination of the cam, the rocker arm, and the like is employed as the variable valve-operating mechanism, this is not limitative, but a mechanism having any other arrangement may be employed insofar as it is a mechanism capable of changing the intake lift.

Further, although in the present embodiment, the intake lift actuator 70 is of electric type, an intake lift actuator of oil pressure type may be used. In this case, for example, in a case where an oil pressure pump which generates oil pressure for driving the intake lift actuator is driven by the engine 3, by holding the intake lift LIFTIN during the auto cruise operation, it is possible to reduce the load on the engine 3, which makes it possible to improve fuel economy.

Further, although in the predetermined lift map in FIG. 6, the predetermined lift LIFTINREF is configured to be increased in a stepped manner along with increase in the target vehicle speed VTGT, the predetermined lift LIFTINREF may be configured to be continuously increased.

Furthermore, although in the above-described embodiment, the present invention is applied to the gasoline engine installed on a vehicle, this is not limitative, but the present invention can be applied to various types of engines, such as a diesel engine, engines other than the gasoline engine, including engines for ship propulsion machines, such as an outboard motor having a vertically-disposed crankshaft.

It is further understood by those skilled in the art that the foregoing are preferred embodiments of the invention, and that various changes and modifications may be made without departing from the spirit and scope thereof.

An intake air amount control system for an internal combustion engine, which is capable of reducing energy for driving a variable intake lift mechanism, and properly controlling an intake air amount during an auto cruise operation. The intake air amount control system for the engine holds a lift of an intake valve at a predetermined lift by holding a target lift at the predetermined lift when it is determined that a vehicle is in the auto cruise operation. This reduces energy required for an intake lift actuator which drives the variable intake lift mechanism, and suppresses heat generated by a motor of the intake lift actuator. Further, during the auto cruise operation, by changing a throttle valve opening, the intake air amount is properly controlled.

## Claims

1. An intake air amount control system for an internal combustion engine that is installed on a vehicle, and includes a variable valve-operating mechanism which is capable of continuously changing a lift of an intake valve, an intake air amount-adjusting valve which is disposed in an intake passage and is capable of adjusting an intake air amount by changing an opening thereof, and an auto cruise function for performing an auto cruise operation in which a vehicle speed of the vehicle is held at a target vehicle speed,
**characterized by** comprising:
an actuator that drives the variable valve-operating mechanism;
auto cruise-determining means for determining whether or not the engine is in the auto cruise operation;
target lift-holding means for holding a target lift which is a target of the lift of the intake valve, at a predetermined lift, when it is determined that the engine is in the auto cruise operation; and
intake air amount-adjusting valve control means for controlling the intake air amount by changing the opening of the intake air amount-adjusting valve when the target lift is held at the predetermined lift by said target lift-holding means.

2. The intake air amount control system as claimed in claim 1, further comprising predetermined lift-setting means for setting the predetermined lift to a fixed value irrespective of the target vehicle speed.

3. The intake air amount control system as claimed in claim 1, further comprising predetermined lift-setting means for setting the predetermined lift according to the target vehicle speed.

4. The intake air amount control system as claimed in claim 1, wherein said actuator is of an electric type.

5. A method of controlling an amount of intake air supplied to an internal combustion engine that is installed on a vehicle, and includes a variable valve-operating mechanism which is capable of continuously changing a lift of an intake valve, an intake air amount-adjusting valve which is disposed in an intake passage and is capable of adjusting an intake air amount by changing an opening thereof, an actuator that drives the variable valve-operating mechanism, and an auto cruise function for performing an auto cruise operation in which a vehicle speed of the vehicle is held at a target vehicle speed,
**characterized by** comprising:
an auto cruise-determining step of determining whether or not the engine is in the auto cruise operation;
a target lift-holding step of holding a target lift which is a target of the lift of the intake valve, at a predetermined lift, when it is determined that the engine is in the auto cruise operation; and
an intake air amount-adjusting valve control step of controlling the intake air amount by changing the opening of the intake air amount-adjusting valve when the target lift is held at the predetermined lift in said target lift-holding step.

6. The method as claimed in claim 5, further comprising a predetermined lift-setting step of setting the predetermined lift to a fixed value irrespective of the target vehicle speed.

7. The method as claimed in claim 5, further comprising a predetermined lift-setting step of setting the predetermined lift according to the target vehicle speed.

8. The method as claimed in claim 5, wherein said actuator is of an electric type.
